# EUROPEAN PATENT APPLICATION

(11) **EP 1 895 753 A1**
(43) Date of publication of application: **05.03.2008**
(21) Application number: 06254177.6
(22) Date of filing: 09.08.2006
(51) Int. Cl.: H04M 11/02

(54) **Door entryphone system**

(71) Applicant: British Telecommunications Public Limited Company, London EC1A 7AJ (GB)
(72) Inventor: The designation of the inventor has not yet been filed
(74) Representative: Roberts, Simon Christopher

(57) **Abstract**

A door entryphone system comprises a remote terminal (1) and a base station (2) which interfaces between the remote terminal (1) and an internal telephone terminal (3). The remote terminal (1) is configured to communicate with the base station (2) and, on activation by a user, send a signal to the base station (2). The base station (2) is configured to, in response to the signal from the remote terminal (1), check the availability of a telephone line to the internal telephone terminal (3) and, if the telephone line is available, to take control of the telephone line and to send a ring signal to the internal telephone terminal (3), the ring signal including a remote terminal identifier code.

## Description

### Field of the Invention

The present invention relates to a door entryphone system having a remote terminal which may be positioned on one side of a door and a controller for communicating with the remote terminal and with a telephone terminal which may be on the opposite side of the door.

### Background to the Invention

Known door phone systems include a remote or external unit and an internal unit. The remote unit includes a microphone, a loud speaker and a button which, on actuation by a user, sends a signal to the internal unit which rings to notify the occupant of a building that someone is at the door. The internal unit will typically include a handset and, when the occupant lifts the handset, two-way voice communication in enabled between the occupant and the person outside the door. Such systems are expensive and require special installation including installing the external unit, installing the internal unit inside the building and running a wire or cable from the external unit to the internal unit.

### Summary of the Invention

The present invention provides a door entry phone system comprising:
a remote terminal; and
a controller;
wherein the remote terminal is configured to communicate with the controller and, on activation by a user, send a signal to the controller;
wherein the controller is configured to, in response to the signal from the remote terminal, check the availability of a telephone line to a telephone terminal and, if the telephone line is available, to take control of the telephone line and to send a ring signal to the telephone terminal, the ring signal including a remote terminal identifier code.

Preferably the remote terminal identifier code is a calling line identifier (CLI) of a type used in the PSTN.

The present invention also provides a method comprising:
sending a signal from a remote terminal of a door entryphone system to a controller of the system;
receiving the signal at the controller of the system;
checking the availability of a telephone line to a telephone terminal; and
if the telephone line is available, seizing the telephone line and sending a ring signal and a remote terminal identifier code to the telephone terminal.

The controller may be integrated with the internal telephone terminal. For example, it may be integrated with the base unit of a DECT type telephone having a base unit and a handset which communicates with the base unit by DECT. However, preferably the controller comprises a separate base station. The system of the present invention is capable of being used with a telephone terminal which is a standard PSTN compatible telephone which is connected, via the controller of the system, to the PSTN. The system of the present invention checks whether the incoming line is available and in effect uses this line to send a ring signal to the internal telephone terminal. The ring signal includes or is accompanied by a remote terminal identifier code which allows the internal telephone terminal to identify that the incoming ring signal is from the door entry phone system and not an incoming call from the PSTN. The remote terminal identifier code can be, for example, standard caller line identification data (of the type used in the PSTN) comprising a string of numbers.

Preferably, the remote terminal communicates with the controller by radio communication. Thus, because the link between the remote terminal outside the building and the controller inside the building is wireless, it is not necessary to install a wire or cable between the outside of the door and the inside of the building.

Preferably, the system further comprises a telephone terminal having a display, wherein the telephone terminal is configured to, in response to the ring signal, recognise the remote terminal identifier code and display a corresponding remote terminal identifier. The internal telephone unit may display the remote terminal identifier code directly, as a numeric string. However, preferably the internal telephone unit comprises a memory which stores remote terminal identifier codes and corresponding remote terminal identifiers, which may be set by a user. Thus, the internal telephone can be set up to store a more readily recognisable remote terminal identifier, such as "front door" which is displayed by the telephone terminal.

Additionally or alternatively the telephone may include a store to store a voiced message to announce the identity of the remote terminal, e.g. "There is someone at the front door", the telephone being operative, in response to receipt of the remote terminal identifier code to play the stored voiced message as a ring tone.

In one embodiment, several remote units are provided, each communicating with the controller on a different frequency channel, wherein the remote terminal identifier sent by the controller is different for each remote unit. The telephone terminal can therefore be set up to display a different remote terminal identifier e.g. "front door", "back door" for each remote unit.

Optionally, the remote terminal and the controller are configured to communicate using a pair of frequency channels, one for communication in each direction. In the case of multiple remote terminals, each remote terminal may have a corresponding pair of frequency channels which are different for each remote terminal. The controller can thus distinguish between incoming signals from different remote terminals by the frequency channel on which the signals are received.

Preferably, the controller is configured to, if the telephone line is in use, send a call waiting signal to the telephone terminal over the telephone line which connects the controller and the telephone. The call waiting signal is preferably an audible signal which can be heard over the telephone line by the person using the telephone line. Additionally or alternatively, the call waiting signal may cause, for instance, a light to flash on the terminal or a notice to appear on a display of the telephone terminal to alert the user that the remote terminal has been activated. Preferably, any audible signal is distinguishable from a call waiting signal used by the network to indicate a new incoming telephone call.

Preferably, if the telephone line is in use, the controller sends a signal to the remote terminal, in response to which the remote terminal provides the user with a line busy signal. Thus, the person waiting at the door is notified that the telephone line is busy. Preferably, the line busy signal comprises an audio tone, although this may also additionally or alternatively be a flashing light or a message displayed on a display.

If the telephone line is in use, the controller may send a signal to the remote terminal, in response to which the remote terminal disables itself for a predetermined time from further activation by the user. However, preferably if the telephone line is in use, the controller sets itself such that, on receipt of further signals from the remote terminal, it does not send a call waiting signal to the telephone terminal. Thus, the user is prevented from repeatedly activating the remote terminal and causing a nuisance to the person inside the building who is making or taking a telephone call. The controller may be prevented from sending further call waiting signals or the remote terminal may be disabled for a predetermined period of time, or until the line is no longer busy.

Preferably, in response to the telephone being answered, the controller allows duplex voice communication between the remote terminal and the internal telephone. Thus, the person inside the building can communicate with the person outside the door.

The remote terminal preferably includes a power source which may be an alkaline battery. However, preferably, the remote terminal includes a rechargeable battery and a solar cell configured to recharge the battery. Thus, the battery is charged when the ambient light level is high, such as during daylight hours.

The present also provides a base station for use in a door entryphone system comprising a receiver for receiving a radio signal from a remote terminal, wherein the base station is configured to, in response to the signal from the remote terminal, check the availability of a telephone line to an internal telephone terminal and, if the telephone line is available, to take control of the telephone line and to send a ring signal and remote terminal identifier code to the telephone terminal.

The present invention further provides a method comprising:
receiving a radio signal from a remote terminal of a warningsystem;
checking the availability of a telephone line to a telephone terminal; and
if the telephone line is available, taking control of the telephone line and sending a ring signal and a remote terminal identifier code to the telephone terminal.

It is envisioned that, in addition to receiving signals from remote units outside doors of a building, a controller may also receive signals from other remote terminals, such as fire alarms. A standard telephone having caller identification can be set up to recognise remote terminal identifiers from the different devices and display the name of the device from which the incoming signal is received.

### Brief description of the drawings

Preferred embodiments of the present invention will now be described in detail with reference to the accompanying drawings, in which:
Figure 1 illustrates a door entryphone system in accordance with a preferred embodiment of the present invention;
Figure 2 is a more detailed view of a remote terminal;
Figure 3 shows an alternative remote terminal; and
Figure 4 shows schematically the operation of the base station

### Detailed description

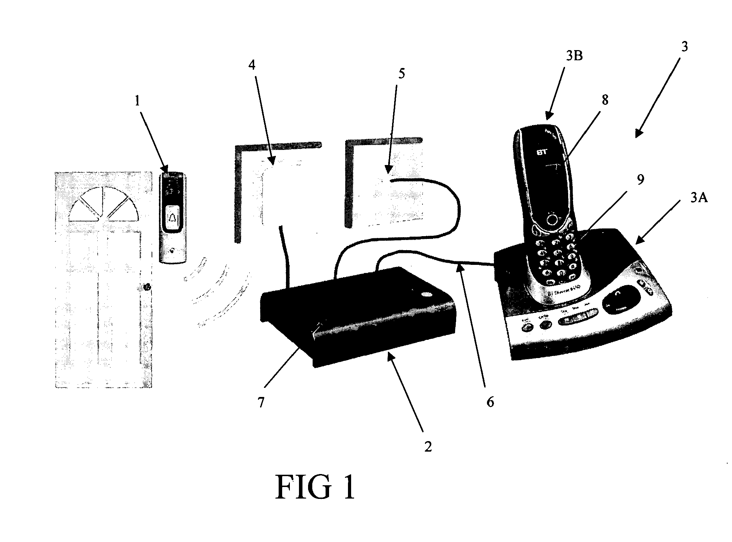

Figure 1 illustrates a door phone system comprising a remote terminal 1, a telephone terminal 3 (which may be inside the building served by the remote terminal) and a controller comprising a base station 2. In this case, the telephone terminal 3 comprises a base unit 3A and a handset 3B, which communicate using a standard wireless communication protocol, such as the DECT standard used in Europe.

The remote terminal 1 communicates with the base station 2 by analogue radio communication and this can conveniently be done using two frequency channels to provide a two-way communication. In Europe, the PMR446 may be used. PMR446 is a radio frequency part of the UHF range that is open without licence for personal usage in most countries of the European Union. The PMR446 system includes 8 FM channels separated by 12.5 kHz from each other. An advantage of using an analogue system such as PMR446 rather than a digital signal such as DECT is that systems of the latter type involve the use of regular "handshakes" between a terminal and a base, which is expensive in terms of battery life. Conversely, in analogue systems of the type exemplified by PMR446, once a frequency channel is opened for communication, it remains open for the duration of the communication, so that it can only be used by one remote terminal at a time. This means that the battery in the terminals is enormously greater with systems such as PMR446 than would be the case if DECT were used. Nevertheless, a system such as DECT can be used, particularly if the installation enables the remote terminal to have an additional or alternative source of power, such as for example the provision of solar cells, or the use of mains power.

The base station 2 includes a plug 4 for connection to a mains power supply and connector 5 connects the base station 2 to a telephone network, particularly to the PSTN. A further telephone cable 6 connects the base station 2 to the base unit 3A of the telephone terminal 3. The base station 2 is therefore positioned in the telephone line between the telephone terminal 3 and the PSTN, and can thus monitor whether the telephone line is in use. The base station 2 includes an LED indicator 7 which indicates when the base station 2 is powered and when the telephone line is in use, for instance by showing a steady illumination when powered and flashing when the telephone line is in use. The base station can be provided with rechargeable cells as a back-up to the mains power supply. But in any event, the base station is so configured that in the event of loss of mains power the telephone remains connected to the network (PSTN) so that calls can continue to be made and received.

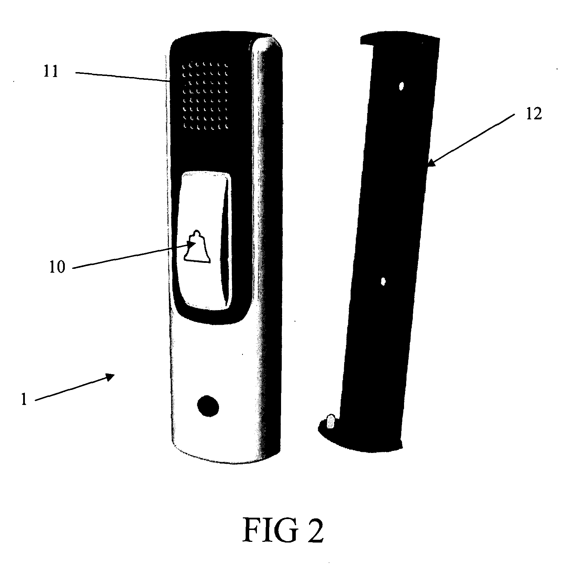

The telephone terminal 3 is here a standard cordless type telephone (e.g. a DECT phone or a Bluetooth phone), and the handset 3B includes a display 8 and a keypad 9. The telephone terminal 3 supports caller line identification, (CLI) which means that the number of a calling party for an incoming call is displayed on the display 8. If the number is stored in the memory of the internal telephone terminal 3 with a corresponding name, then the name is displayed on the display 8. Transmission of CLIs over the PSTN is now commonplace and telephones to display received CLIs are widely available. The use of a conventional, that is corded rather than cordless phone, preferably with caller display is of course also possible.
The remote terminal 1 is shown in more detail in Figure 2, and includes a button 10, which may be backlit, and a speaker portion 11, behind which a speaker and a microphone are mounted, for reproducing and receiving voice communication. The remote terminal 1 is mounted on a bracket 12 and is removable so that the back of the remote terminal 1 can be accessed. The back of the remote terminal 1 includes a removable portion and a recess for holding a battery.

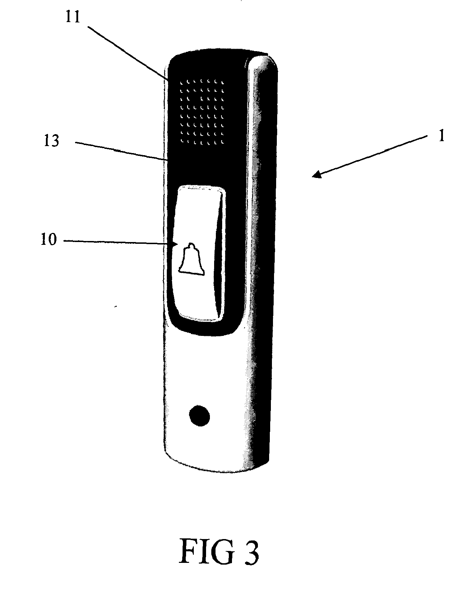

Alternatively, as shown in Figure 3, the remote terminal 1 may include a solar panel 13 which is used to charge a rechargeable battery for powering the remote terminal 1.

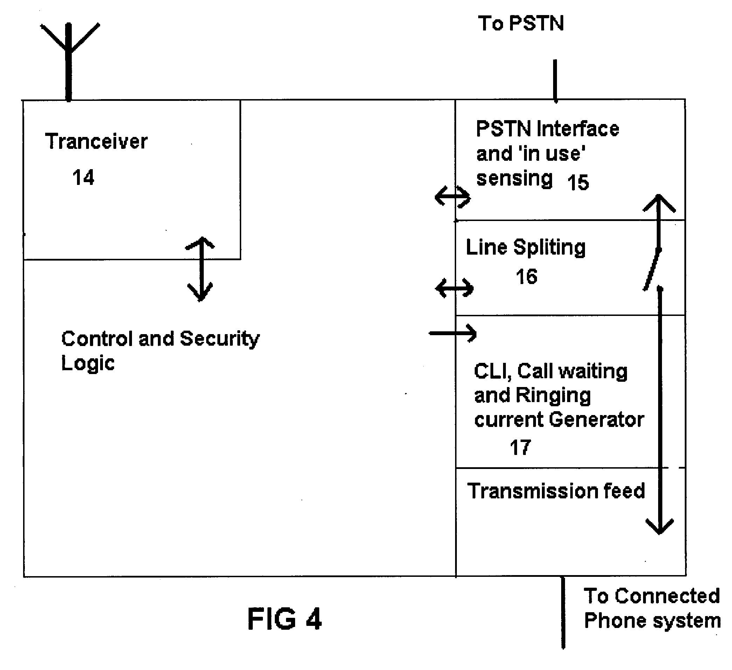

The operation of the door phone system will now be described. Figure 4 illustrates schematically the operations carried out by the base station 2. When a user presses the button 10 on the remote terminal 1, a calling signal is sent from the remote terminal 1 on a predetermined frequency channel to the base station 2, and is received by the base station transceiver 14. The calling signal starts with a simple security code, typically a 5 tone sequence representing a 5 bit binary code. On recognition of the code, the base station 2 opens a communication channel on the predetermined frequency between the transceiver 14 and the remoter terminal 1. The security code ensures that the base station 2 can distinguish the signal from the remote terminal 1 from any signal from another remote terminal in the vicinity, such as a remote terminal on an adjacent door which may communicate with a base station in an adjacent building. The base station 2 is therefore not activated by a remote terminal of a neighbour's system, even if it is operating on the same frequency. The base station 2 includes PSTN interface and sensing circuitry 15, which checks whether the telephone line is in use and, if not, the line is seized to prevent incoming calls. The base station 2 achieves this by line splitter 16 disconnecting the incoming PSTN line and connecting a terminating resistor across the end of the line. Incoming callers will then receive an engaged tone, and the line from the base station 2 to the 1 telephone terminal 3 is then under the control of the base station 2. The base station 2 then sends a ring signal generated by tone generator 17 and including a remote signal identifier code via the line 6 to the internal telephone terminal 3.. The base station 2 checks whether the telephone line is in use and, if not, the line is seized for a predetermined time to prevent incoming calls. That is, the base station loops the incoming telephone line so that the local exchange senses that the line has gone "off hook". This means that any calls received at the local exchange and intended for the number of the telephone terminal 3 will not be placed by the local exchange but will rather receive the engaged tone (or such other handling as is usually provided in a line busy state. The telephone terminal 3 is then under the control of the base station 2. The base station 2 sends a ring signal including a remote signal identifier code (which in this embodiment is a CLI of the type used in the network (PSTN) for which the telephone is configured) via the line 6 to the telephone terminal 3. The base unit 3A of the terminal communicates with the handset 3B by DECT. The telephone terminal 3 receives the remote terminal identifier code and rings. The telephone terminal 3 is set up to recognise the remote terminal identifier code and display a corresponding name on the display 8, for example the display 8 might display "front door". If the telephone terminal 3 is configured to provide distinctive ring tones for particular CLIs which differ from that for "ordinary" calls, it is convenient to arrange for the remote terminal identifier to cause the phone 3 to ring with a ring tone which is different to the ring tone(s) used for incoming telephone calls. Thus, the resident of the building is alerted that a visitor is at the door, both by the name displayed on the display 8, and by the audibly distinct ring tone. The duration of line seizure is preferably adjustable by the installer or the owner of the installation, but the default time will typically be set to between 20 and 60 seconds, more usually 25 to 50 seconds, and generally from 30 seconds to 45 seconds.

When the telephone unit 3 is ringing, the base station 2 transmits the ringing tone to the remote terminal 1, so that the visitor knows that the telephone terminal 3 is ringing.

If the 1 telephone terminal 3 is not answered within the predetermined period of time, then the base station 2 releases the line and transmits a signal to the remote terminal 1, which may provide a tone or other audible or visible message to indicate to the visitor that the telephone terminal 3 has not been answered. For example, the base station or the remote terminal may include one or more stored messages to announce that the telephone has not been answered, or that it is engaged, or that the visitor may leave a message via the remote terminal. These messages could be generic, and pre-installed on the system prior to distribution, or they could be personalised to the owner/occupier of the premises served by the door phone.

When the telephone terminal 3 is answered, a full duplex path is set up between the remote terminal 1 and the internal telephone terminal 3, so that the visitor can communicate with the resident. If the call is answered by an answering machine, the same full duplex path is available for the visitor to leave a message. Speech encryption may be used to encrypt the voice communication. Alternatively the base station itself may provide a message recording function so that those using the remote terminal can leave messages even if no other answering machine functionality is provided. An advantage of this option is that it reduces the likelihood of the operator of the system confusing messages left by telephonic callers and those left by visitors.

If the telephone line serving the phone 3 (e.g. the PSTN) is in use, then the base station 2 injects a call waiting signal, generated by the tone generator 17, onto the line 6 so that the resident can tell that a visitor is at the door. The call waiting signal is made to be distinctive from the standard (network, e.g. PSTN) call-waiting signal used to indicate that another incoming call is waiting.

If the base station 2 determines that the network serving the phone 3 (e.g. the PSTN) is in use, it also sends a signal to the remote terminal 1 which indicates to the visitor that the line is busy. It will often be desirable for this busy tone to be the same as that conventionally provided as the local PSTN busy tone - which of course varies from country to country. Alternatively, a voiced message may be provided to announce that the line is busy. When the base station 2 sends a signal to the remote terminal 1 indicating that the line is busy, the base station 2 sets itself such that, for a predetermined time period, on receipt of any further signals from the remote terminal 1, it does not send any further call waiting signals to internal telephone terminal 3, so that the resident's telephone call is not disturbed as a consequence of the user repeatedly activating the remote terminal 1. Alternatively, the remote terminal 1 may be configured to disable the button 10 so that the visitor cannot repeatedly ring and disturb the owner who is talking on the telephone.

Multiple remote terminals 1 may communicate with a single base station 2. Each remote terminal 1 may use a different pair of frequency channels for communication with the base station 2. In the case of multiple remote terminals 1, the base station 2 could then recognise an incoming signal from a particular remote terminal 1, by recognising the predetermined frequency band on which the signal is received. The base station 2 applies to the signals which it provides to the telephone 3 a different remote terminal identifier code for each remote terminal 1. The internal telephone terminal 3 recognises each remote terminal identifier code and a user can store a different name for each one so that the display 8 displays a different name for each remote terminal 1, for instance "front door", "back door" etc. If the remote terminal 1 and the base station 2 communicate using the PMR446 system, then eight channels are available in total therefore up to four different remote terminals 1 can be used. Alternatively, the base station and remote terminals can be configured to look for free channels (wavelength, timeslot, or timeslot and wavelength) - although this tends to be more expensive to implement (and tend to use more power) than using pre-allocated channels.

Alternatively, a single remote terminal may include multiple buttons, each of which causes a signal to be transmitted using a different predetermined frequency band. Multiple base stations 2, each having a corresponding internal telephone terminal 3, are located within a building, and each will be tuned to a different frequency so that they only send a ring signal to their corresponding internal telephone units in response to activation of one of the buttons on the remote terminal 1 . This arrangement can be used, for instance, where multiple apartments in the same building share a single front door. One button on the remote terminal 1 is used for each apartment.

Providing the base station 2 as a separate unit allows the system to be used with an existing telephone as the internal telephone terminal 3. However, it is possible alternatively to integrate the base station 2 with the DECT base unit 3A, thus removing the need for cable 6. Thus, the integrated base unit receives the signal from the remote terminal 1, checks the availability of the incoming line and, if the line is available, takes control of the line and sends a ring signal to the handset 3B.Instead of each link using a different frequency, the different links could each use a distinctive code word or other identifier. Factory pre-registration can be used between the base station and the associated remote terminals, or a registration process can be performed by the person who sets up the system (rather as multiple DECT handsets can be added to and registered with a single DECT base).

There is a small chance that neighbouring systems may interfere with each other. The system can be adapted such that the power of transmissions is low enough that the range of the transmissions would not be far enough to potentially encompass many adjacent buildings. However, if two neighbouring buildings had neighbouring doors (or the same door in the case of apartments) and had remote terminals which utilised the same frequency band, and visitors attempted to operate both remote terminals simultaneously, then there could be interference, although this would be quite unlikely to occur. However, it would potentially be possible to avoid this problem by adapting the remote terminal 1 to scan for available frequency channels and to transmit on a free channel. In the case of multiple remote terminals used with a single base station, the base station would recognise which remote terminal is being activated by the security code (e.g. a 5-tone sequence). By giving each remote terminal its own distinctive identifier, which the base station can then use in responding to activation of a remote terminal the effects of "overlap" between neighbouring installations can be minimised. That is, activation of the remote terminal at 10 Downing Street will not activate the base station of the installation of 11 Downing Street, since even if two remote terminals operate on the same frequency, they will have different code words which are registered with their respective base stations.

The call waiting signal injected onto the line by the base station 2, may be a voice announcement, such as a message "there is a visitor at the door". This message would be stored in a memory of the base station 2, which may have a number of different messages stored thereon. The base station 2 may include a facility whereby the user can chose which message is used to announce different callers, and if multiple remote units 1 are used for different doors, the message may be varied depending on which remote unit 1 has been activated. For instance, a message might say "there is a visitor at the front/back door". In the simplest embodiment, the base station 2 injects the message onto the line and it can be heard by both parties in the telephone call. To avoid the message being heard by the person to whom the resident of the building is speaking, the base station 2 may split the line using a 2 wire to 4 wire hybrid splitter, so that the message can be injected onto the split line so that it can only be heard by the resident of the building. Another desirable but optional feature is for the RF transmissions between the base station and the remote terminals, in both directions, to be encrypted to reduce the risk of eavesdropping.

## Claims

1. A door entryphone system comprising:
a remote terminal (1); and
a controller (2);
wherein the remote terminal (1) is configured to communicate with the controller (2) and, on activation by a user, send a signal to the controller (2);
wherein the controller (2) is configured to, in response to the signal from the remote terminal (1), check the availability of a telephone line to a telephone terminal (3) and, if the telephone line is available, to seize the telephone line and to send a ring signal and a remote terminal identifier code to the telephone terminal (3).

2. A door entryphone system according to claim 1, wherein remote terminal identifier code is a CLI.

3. A door entryphone system according to claim 1 or 2, wherein in the event that the controller (2) is configured so that, in the event that it seizes the line it does so for a pre-determined interval of time.

4. A door entryphone system according to claim 3, wherein the pre-determined interval is between 20 and 60 seconds.

5. A door entryphone system as claimed in claim 4 wherein the interval is between 30 and 50 seconds.

6. A door entryphone system any one of the preceding claims, wherein the remote terminal (1) is configured to communicate with the controller (2) by radio communication.

7. A door entryphone system as claimed in claim 6, wherein the radio communication system is achieved using an analogue transmission system.

8. A door entryphone system according to claim 6 or 7, wherein the remote terminal (1) and the controller (2) are configured to communicate using a pair of frequency channels, one for communication in each direction.

9. A door entryphone system according to any one of the preceding claims, wherein the controller comprises a base station (2) which is separate from the telephone terminal (3).

10. A door entryphone system according to claim 9, wherein the base station (2) is configured to, if the telephone line is in use, send a call waiting signal to the 1 telephone terminal (3) over the telephone line.

11. A door entryphone system according to any one of the preceding claims, wherein, if the telephone line is in use, the controller (2) sends a signal to the remote terminal (1), in response to which the remote terminal (1) provides the user with a line busy signal.

12. A door entryphone system according to claim 11, wherein the line busy signal comprises an audio tone.

13. A door entryphone system according to any one of the preceding claims wherein, if the telephone line is in use, the controller (2) sets itself for a predetermined time so that, on receipt of further signals from the remote terminal (1), it does not send a call waiting signal to the internal telephone terminal (3).

14. A door entryphone system according to any one of the preceding claims, wherein the controller (2) is configured to, in response to the telephone terminal (3) being answered, allow duplex voice communication between the remote terminal (1) and the telephone terminal (3).

15. A door entryphone system according to any one of the preceding claims, wherein the remote terminal (1) includes a rechargeable battery and a solar cell (13) configured to recharge the battery.

16. A door entryphone system according to any one of the preceding claims comprising a plurality of remote terminals, each configured to communicate with the controller (2) on a different frequency channel, wherein the remote terminal identifier sent by the controller (2) is different for each remote terminal (1).

17. A door entryphone system according to any one of the preceding claims, further comprising:
a telephone terminal (3) having a display (8);
wherein the telephone terminal (3) is configured to, in response to the ring signal, recognise the remote terminal identifier code and display a corresponding remote terminal identifier on the display (8).

18. A door entryphone system according to claim 17, wherein the internal telephone terminal (3) is configured so that a user can enter and store the remote terminal identifier to correspond to the remote terminal identifier code.

19. A base station (2) for use in a door entryphone system comprising:
a receiver for receiving a radio signal from a remote terminal (1), wherein the base station is: configured to, in response to the signal from the remote terminal (1), check the availability of a telephone line to a telephone terminal (3) and, if the telephone line is available, to seize the telephone line and to send a ring signal and a remote terminal identifier code to the internal telephone terminal (3).

20. A method comprising:
sending a signal from a remote terminal (1) of a door entryphone system to a controller (2) of the system;
receiving the signal at the controller (2) of the system;
checking the availability of a telephone line to a telephone terminal (3); and
if the telephone line is available, taking control of the telephone line and sending a ring signal to the telephone terminal (3), the ring signal including a remote terminal identifier code.

21. A method according to claim 20, wherein the signal sent from the remote terminal (1) to the controller (2) is a radio signal.

22. A method according to claim 20 or 21, wherein the remote terminal (1) and the controller (2) communicate using a pair of frequency channels, one for communication in each direction.

23. A method according to any one of claims 20 to 22, further comprising, if the telephone line is in use, sending a call waiting signal to the telephone terminal (3) over the telephone line.
